# EUROPEAN PATENT APPLICATION

(11) **EP 2 056 495 A1**
(43) Date of publication of application: **06.05.2009**
(21) Application number: 07291304.9
(22) Date of filing: 29.10.2007
(51) Int. Cl.: H04B 10/207

(54) **Electrical point-to-multipoint repeater for PON**

(71) Applicant: Alcatel Lucent, 75008 Paris (FR)
(72) Inventor: Pfeiffer, Thomas, 70569 Stuttgart (DE)
(74) Representative: MERH-IP Matias Erny Reichl Hoffmann

(57) **Abstract**

The present invention relates to an electrical point-to-multipoint repeater for Passive Optical Networks (PONs). A multiport passive optical network extender (1) comprises an optical input/output port for connection via an optical fiber (4) to the feeder side of the PON; a plurality of optical input/output ports for connection via respective optical fibers (5) to the distribution side of the PON; and an electrical distribution network (6) for connecting the feeder-sided input/output port to the plurality of distribution-sided input/output ports in the electrical domain.

## Description

The present invention relates to an electrical point-to-multipoint (PTMP) repeater for Passive Optical Networks (PONs).

Early work on efficient fiber to the home architectures was done in the 1990s by the Full Service Access Network (FSAN) working group, formed by major telecommunications service providers and system vendors. The International Telecommunications Union (ITU) did further work, and has since standardized on two generations of passive optical networks. PON is a point-to-multipoint, fiber to the premises network architecture in which unpowered passive optical splitters are used to enable a single optical fiber to serve multiple premises, typically 32 up to 128. A PON consists of an Optical Line Termination (OLT) at the service provider's central office and a number of Optical Network Units (ONUs) or Optical Network Terminals (ONT) near end users. A PON configuration reduces the amount of fiber and central office equipment required compared with point-to-point (PTP) architectures.

Downstream signals in PON are broadcast to each premises sharing a single feeder fiber. Upstream signals are combined using a Multiple Access Control (MAC) protocol based on Time Division Multiple Access (TDMA). The OLTs configure the served ONTs in order to provide time slot assignments for upstream communication.

Different variants of PON architectures have been specified. APON (ATM Passive Optical Network), which was the first passive optical network standard, was used primarily for business applications, and was based on ATM. BPON (Broadband PON) is a standard based on APON. It adds support for additional RF video services provided on a separate optical channel via WDM, dynamic and higher upstream bandwidth allocation, and survivability. It also created a standard management interface, called OMCI, between the OLT and ONU/ONT, enabling mixed-vendor networks. GPON (Gigabit PON), which is an evolution of the BPON standard, supports higher rates, enhanced security, and the choice of the Layer 2 protocol (ATM, TDM and Ethernet via GEM). In addition, the IEEE issued a Ethernet PON (EPON or GEPON) standard in 2004, as part of the Ethernet First Mile project. EPON uses standard Ethernet frames with symmetric 1 gigabit per second upstream and downstream rates.

The ITU-T G.984 GPON standard represents a boost in both the total bandwidth and bandwidth efficiency through the use of large, variable-length packets. The standards permit several choices of bit rate, but the industry has converged on 2,488 megabits per second (Mbit/s) of downstream bandwidth, and 1,244 Mbit/s of upstream bandwidth. To allow such bandwidth over a distance of 20 km when using a 64-way optical splitter, a demanding optical budget of 28 dB is required.

GPON takes advantage of Wavelength Division Multiplexing (WDM), using one wavelength for downstream traffic and another for upstream traffic on a single standard single-mode fiber (ITU-T G.652). The specification calls for downstream traffic to be transmitted on the 1490 (±10) nanometer (nm) wavelength and upstream traffic to be transmitted at 1310 (±50) nm. The 1550 nm band is allocated for optional overlay services, typically RF video (in the range 1550-1560 nm). Furthermore, GPON is a shared network, in that the OLT sends a single stream of downstream traffic that is received by all ONTs. Each ONT only reads the content of those packets that are addressed to it. Encryption is used to prevent eavesdropping on downstream traffic.

The OLT and in particular the multiple access controller is responsible for allocating upstream bandwidth to the ONTs. Because the Optical Distribution Network (ODN) is shared, ONT upstream transmissions could collide if they were transmitted at random times. ONTs can be located at varying distances from the OLT, meaning that the transmission delay from each ONT is arbitrary. The OLT measures the delay and sets a register in each ONT via PLOAM (Physical Layer Operations and Maintenance) messages to equalize its delay with respect to all of the other ONTs on the PON. Once the delay of all ONTs has been set, the OLT transmits so-called grants to the individual ONTs. A grant is permission to use a defined interval of time for upstream transmission. The grant map is dynamically re-calculated every few milliseconds. The map allocates bandwidth to all ONTs, such that each ONT receives timely bandwidth for its service needs.

Some services - POTS, for example - require essentially constant upstream bandwidth, and the OLT may provide a fixed bandwidth allocation to each such service that has been provisioned. But most data traffic - internet access, for example - is bursty and highly variable. A given ONT only transmits optical packets when it is allocated a time slot and when it needs to transmit. Whereas the time of reception for a single burst at the OLT is known from the grant allocation algorithm, the bit phases are still variable and unknown from burst to burst. Besides the characteristics of random bit phases in the burst mode packets, there is also an issue with regard to the optical power of the received bursts. Since the link loss (due to distance and split ratio) between the OLT and ONTs are not identical and since the ONT transmit powers are variable within a typically 5 dB tolerance range, the optical bursts received by the OLT have different powers. In order to account for the phase variation and power variation in a short time, special burst mode clock and data recovery circuits (BM-CDR) and burst mode amplifiers (e.g., burst mode TIA) need to be employed, respectively. Furthermore, the BM transmission mode requires the transmitters to work in a burst mode, and such burst mode transmitters need to be able to be turned on and off in short time.

These above mentioned requirements, notably
- High splitting ratios and varying splitting losses
- Long and variable distances between the OLT and the ONTs
- Bursty traffic with variations of bit phase and optical power at the OLT receiver
   result in the relatively high cost of the transceivers employed for GPON equipment which can negatively affect the commercial success of high bandwidth access based on GPON technology. With new PON generations which may support bitrates of up to 10 Gbit/s also for upstream transmission these issues will become even more challenging.

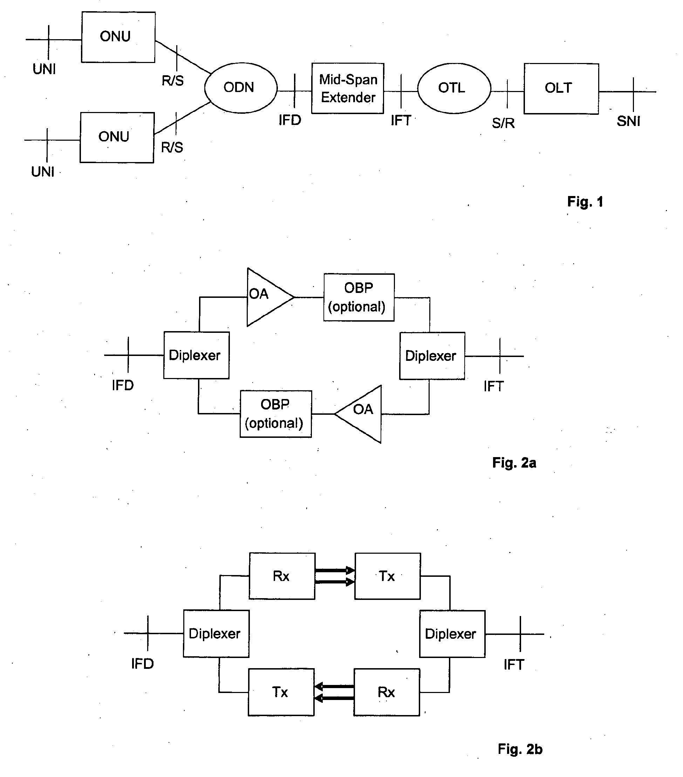

Currently, it is being discussed (e.g. at FSAN OAN study group) to add a mid-span extender between the Optical Trunk Line (OTL) and the Optical Distribution Network (ODN) using the respective interfaces to the trunk side (IFT) and to the distribution side (IFD); see Fig. 1. The extender boxes are for increasing the optical power budget of the PON to enable e.g. extending the trunk length and allowing longer distances in PONs. Extender boxes will be located in the feeder section of the PON having a single optical port (IFT) towards the OLT and a single optical port (IFD) towards the ONT. They will apply either optical amplifiers (e.g. Semiconductor Optical Amplifiers (SOAs): one for downstream, one for upstream, and optional Optical Bandpass filters (OBP); see Fig. 2a) or optical-electrical-optical (oeo) conversion with a photodiode and a laser diode and an in-between electrical regeneration of the signals (one oeo converter in downstream, one oeo converter in upstream; see Fig. 2b). The drawback of this solution is that the ONT side of the extender box has still to cope with the usual PON issues: high splitting loss (i.e. poor optical power budget) and burst operation in upstream, thus experiencing a large dynamic range of optical powers for bursts originating from different ONTs. Consequently the extender box has to include challenging optics and electronics that can bridge large loss budgets while being compliant with burstmode operation.

The present invention addresses the above problems of the prior art and provides a solution to extend the power budget of legacy GPON or EPON by including a multiport extender box between OLT and ONT.

According to an aspect of the invention, a PON extender device is placed at the location of the PON optical splitter, and equipped with a plurality of optical transceivers on the ONT side: one for each outgoing fiber. The port of the extender device that is connected to the OLT, either directly or indirectly via other equipment, is called the feeder-sided port. The ports of the extender box on the network side towards the ONTs are called distribution-sided ports. The splitting is realized in the electrical domain instead of the optical. Each drop (or distribution) fiber of the PON is connected to a dedicated optical port of the extender device.

According to the invention, a multiport passive optical network extender is provided. The multiport PON extender comprises an optical input/output (IO) port for connection, via an optical fiber, to the feeder side of the PON, e.g., an optical line termination (OLT); a plurality of optical IO ports for connection, via optical fibers, to the distribution side of the PON, e.g., respective optical network terminals (ONT); and an electrical amplified distribution network for connecting the OLT-sided IO port to the plurality of ONT-sided IO ports in the electrical domain.

Preferably, the PON extender device has no PON related intelligence inside (i.e. no switching or other Layer-2 function); only Layer-1 network functions are performed in the extender. Incoming optical signals in downstream and upstream direction are forwarded transparently with regard to the PON MAC protocol to the respective opposite IO port(s). The multiport extender comprises optical transceivers in the IO ports for receiving/transmitting optical signals and converting the optical signals to/from electrical signals. The extender device comprises preferably an electrical 2R repeater with splitter/combiner. It allows the electrical signal to be amplified and its pulse shape to be regenerated. The multiple access control is performed via the usual PON Transmission Convergence TC Layer/MAC. The extender box transparently transmits all incoming optical signals (both in downstream and upstream direction) to the respective opposite end of the PON. A plurality of extender devices can as well be cascaded to configure a more complex network.

The extender device may as well include full 3R regeneration (i.e. clock regeneration in addition to amplification and pulse shape regeneration as in 2R amplifiers), although this requires more complex electronics for regeneration of upstream signals.

The extender device does not include any switching capabilities for the OLT and ONT data. Instead, the multiple access control for the PON is performed between OLT and ONT using available TC Layer/MAC procedures and electronics in exactly the same way as if the extender device was a simple optical power splitter.

The passive optical splitters of a PON can either entirely or only partly be replaced by multiport extender devices according to the invention. In the latter case, each optical port of the extender device then serves a smaller fraction of the PON (sub-group of ONTs) which is employing optical power splitting in the usual way as known from GPON, but with reduced splitting losses.

Further is provided a method for extending a passive optical network. The method comprises the step: receiving an optical input signal from an optical line termination; converting the received optical input signal into an electrical input signal; splitting the electrical input signal into identical electrical output signals; providing the electrical output signals to electrical/optical converters and converting the respective electrical output signals to corresponding optical output signals; and transmitting the optical output signals on respective optical ports to optical network terminals. The optical output signals that are transmitted to the respective ONTs in the downstream direction are identical. Thus, downstream signals from the OLT to ONTs are electrically splitted and distributed to the ONTs without incurring any (optical) splitting loss.

The following steps may be performed in the method to electrically regenerate the signals: amplifying the converted electrical signal; and regenerating pulse shapes of the electrical signal before splitting the signal. This is usually performed using a limiting electrical amplifier.

According to another aspect of the invention, upstream signals received from ONTs are combined in the electrical domain by the following method steps: receiving optical signals on optical ports from ONTs, respectively; converting the optical signals to electrical signals; combining the electrical signals to generate a combined electrical signal; converting the combined electrical signal to an optical signal; and transmitting the optical signal to the OLT.

The method is preferably extended by amplifying the converted electrical signals up to a common signal level; and regenerating pulse shapes of the electrical signal before adding the signal.

The proposed approach to splitting in PONs makes the OLT and ONT optics and physical layer electronics much simpler and, thus, less expensive than today, while enabling transmission over longer distances and with higher split factors than with today's approaches. Whereas in conventional PONs the optical links are of point-to-multipoint topology, the optical links according to the invention are simple point-to-point links with reduced loss and hence requiring much less challenging specifications on laser optical power and receiver sensitivity. Even for the burst signals in upstream (which are still needed, since the extender box is not resolving contention), the requirements are far less challenging than e.g. in GPON, since each optical port is connected to a single ONT (or to a small group of ONTs) only. Hence, there is no or only little variation of the optical powers from burst to burst.

Further, the multiport extender device extends the spanning of the PON and allows larger distances to be covered. The proposed approach integrates mid-span extender and passive optical splitter of ODN which allows the configuration of complex PONs. According to the invention, the optical splitter in a PON can be replaced by a multiport extender device and the entire physical layer is made simpler while still keeping it "dumb" (i.e. no switching intelligence inside the box) so that no additional modifications to the PON TC Layer are necessary and a multiport extender device can be substituted into an existing network and mixed with other prior art equipment.

The objects and features of the invention will become apparent from the following description of preferred embodiments. The present invention is described in the following by referring to exemplary embodiments illustrated schematically in the accompanying figures, wherein
Fig. 1 illustrates a mid-span extender box for PON as in discussion at FSAN (G.984.re);
Fig. 2a shows schematically an optically amplified extender box architecture;
Fig. 2b shows schematically an extender box architecture with electrical repeaters;
Fig. 3 illustrates schematically an embodiment of the invention;
Fig. 4 illustrates schematically a multiport extender device according to an embodiment of the invention;
Fig. 5 shows schematically a network architecture using cascaded multiport extender devices; and
Fig. 6 shows schematically a hybrid network architecture.

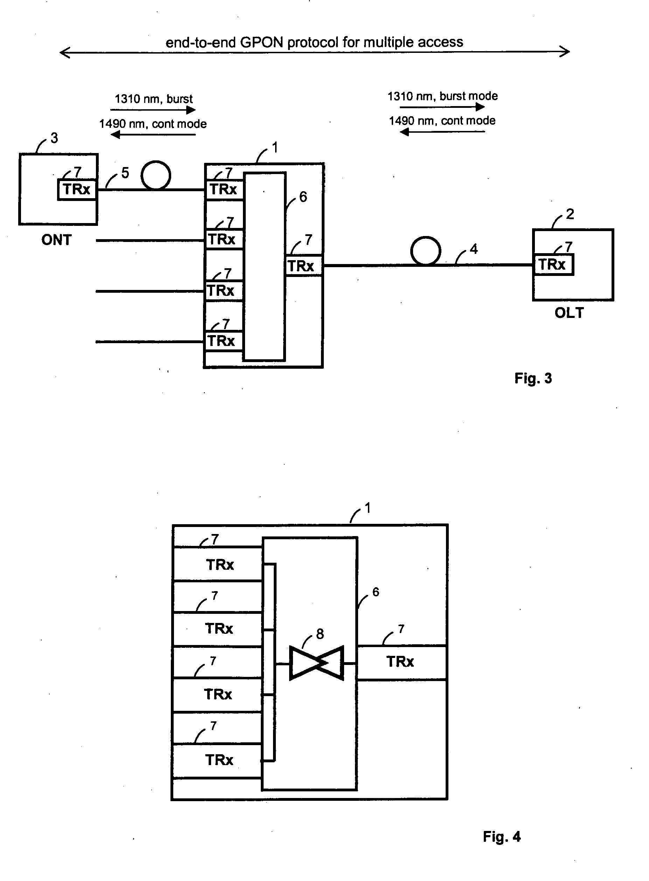

Fig. 3 illustrates schematically the new concept of the invention: the use of a multiport extender box in place of on optical splitter in a PON.

A multiport extender device 1 is arranged as remote node in the PON between OLT 2 and ONTs 3 (for simplicity, only one ONT is shown in Fig. 3). The multiport extender device 1 is connected via a feeder fiber 4 to the OLT 2 and via a drop fiber 5 to the ONT 3. In the depicted example, the downstream traffic is on 1490 nm, continuous mode, and the upstream traffic is on 1310 nm, burst mode. The multiport extender device 1 comprises an electrical distribution matrix 6 and point-to-point optical transceivers 7 that operate on a single fiber, bidirectional on 1310 nm/1490 am. Although a 1-to-4 electrical splitter 1 is shown in Fig. 3, it should be noted that different splitting ratios may be applied and the invention is not restricted to the depicted examples.

The end-to-end standard GPON protocol on network Layer-2 is applied for multiple access control of the burst upstream traffic. The electrical signal distribution and regeneration in the extender device 1 stays within Layer-1 of the network protocols and is fully transparent so that the PON endpoints do not recognize the existence of the extender device 1. As no switching is applied in the multipoint extender, downstream traffic is evenly distributed to all drop sections which consequently carry identical downstream signals. Similarly, all upstream traffic arriving at the ONT-sided ports of the multiport extender is forwarded to the joint feeder fiber. The MAC protocol regulates the timing of upstream signal bursts from ONTs so that contention on the feeder fiber and hence at the OLT receiver is avoided.

Fig. 4 illustrates schematically an embodiment of the extender device 1 and in particular the electrical distribution network 6 in more detail. Other electrical and/or optical components may be included in the extender device 1, too, The electrical splitting concept of the invention allows using PTP optical modules instead of the more complex PTMP components that are necessary in prior art PONs. PTMP links have demanding requirements regarding transmission power, receiver sensitivity and must be compliant with burst mode operation. The invention allows establishing PTP links which have, in general, less stringent requirements to optical components. Using PTP links has the advantage that the optical modules may be , e.g., of the Small Form-Factor Plugable (SFP) type or other relatively simple and inexpensive optical standard components. The invention further allows integration into high density package (e.g. Quad-SFP plus ribbon fiber). The electrical splitting and the PTP links significantly reduce the requirements for the optical system components so that optical modules can be applied in the OLT and, most importantly, in the ONTs that have very similar specifications in terms of optical power and receiver sensitivity as those applied in standard PTP optical networks like optical Gigabit-Ethernet. Only the burst transmission and reception in upstream is still special, but now having largely reduced specifications as compared to legacy GPON due to the PTP topology of the optical links.

The electrical splitting and the point-to-point link concept improves in particular the power budget of the optical components. The PTP links require only moderate optical laser power. For example for the drop section, -10 dBm optical laser power may be sufficient. Due to the usually short length of the drop links low cost Fabry-Perot (FP) type lasers may be used. An optical laser power of 0 dBm may be sufficient for the feeder section. Preferably, a Distributed Feedback (DFB) type laser is applied to the feeder section. Also the receiver sensitivity is moderate even for long feeders. A sensitivity of -20 dBm would be sufficient in many cases allowing to apply low cost PIN photodiodes at OLT and ONT. No issue from arbitrary split factors arises when the network is employed in various configurations. Optical losses in the drop sections experienced in PON networks can be compensated in the multiport extender device so that upstream signals from different ONTs have the same power level on the feeder section which significantly simplifies the required receiver characteristics in the OLT.

According to an embodiment, the electronic amplification and internal signal distribution performed in the electrical distribution network 6 comprises limiting electrical amplifiers 8 of the 2R type (not shown are additional electrical driver amplifiers on the drop side of the electrical distribution network that are potentially required to drive the optical modules connected to the electrical output ports). No clock recovery and no clocked operation of sub-modules is performed. Unclocked burst mode in upstream may require minimum length preambles. Thus, the complexity of the electrical components is low which reduces cost of the multiport extender and keeps power consumption down. The proposed electrical splitting is best suited for simple binary coded signals because in that case no complex components are needed. However, the present invention is not limited to binary signals and may be applied to other modulation formats as well.

As with a standard mid-span extender box, the electrical powering of the remote multiport extender box is generally no issue if located in a street cabinet or in buildings. If the device is located in manholes or on poles, a low power consumption is preferred which can be achieved by a small split factor, i.e. a low number of modules arranged in the box.

According to an aspect of the invention, optical components with different bandwidths may be employed in the multiport extender device. This allows, for instance an upgrade of multiport extenders employed in the field for future bandwidth extensions from presently 1,25/2,5 GBps to planned 10 GBps for GPON. Preferably, the electric distribution matrix 6 is and the optical parts on the OLT-side are already initially configured for 10 GBps operation while ONT-sided ports use initially less expensive 1,25/2,5 GBps optical components. Upon demand on the user side, individual ports can be upgraded to higher speed by replacing the respective SFP modules. The high speed modules as well as the internal electrical circuits must be capable to handle multilevel signals as they have been specified for simultaneous transmission of 2.5 GBps and 10 GBps data on a single optical channel by applying bit-stacked optical modulation as disclosed in European patent application EP 07300984.7 dated 25.4.2007 of the present applicant which is included by reference in its entirety. This approach reduces cost with the initial deployment of the equipment and allows gradual upgrade on growing demand which secures network operators' investments.

According to another embodiment of the invention, electric distribution networks 6 are cascaded in the electric domain. For instance, an electric port of distribution network 6 is not connected to a transceiver 7 but to the OLT-side port of another distribution matrix 6. Thus, large electric distribution networks can be configured from smaller distribution matrixes to configure, e.g., an all electric splitting network with a large number of ports. As splitting in the electric domain has no adverse effects on signal quality (splitting losses are compensated by the regeneration amplifiers), splitters with a high splitting ratio are possible for PONs without challenging the optics too much.

Additional optical network architecture options are discussed in the following.

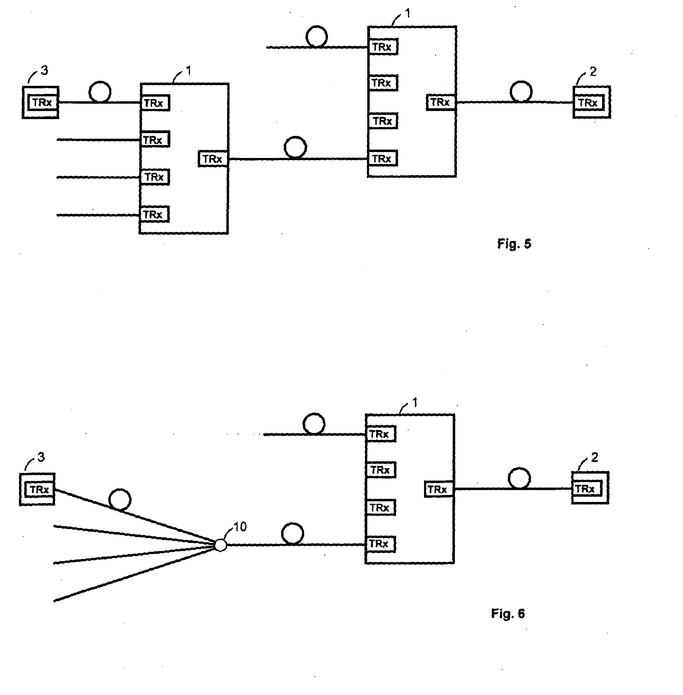

Fig. 5 illustrates schematically a network architecture with cascaded multiport extender devices according to the invention. The depicted example comprises two cascaded 1-to-4 multiport extenders to connect 16 ONTs in total. In this architecture, all advantages of the electrical splitting according to the invention are available, i.e. only PTP links are used. Of course, different cascading schemes may be used and more complex networks configured by employing multipoint extenders according to the present invention.

Fig. 6 illustrates schematically a hybrid architecture comprising a multiport extender device 1 according to the present invention. The feeder section of this example comprises point-to-point optics between OLT and the multiport extender 1. In the drop section an additional passive optical splitter 10 is applied to distribute the optical signals to the ONTs. Point-to-multipoint optics is used between ONT(s) and the multiport extender 1. Due to the low split ratio at the passive optical splitter 10, the optical requirements for the optical components are still moderate. For instance, in the cascaded network of Fig. 6 only a 1-to-4 optical splitting is necessary to serve 16 OLTs, whereas in a comparable prior art PON a 1-to-16 optical splitting would be necessary. Thus, e.g. the power variations in upstream signals from different ONTs are much lower which results is reduced requirements for the receiver components on the ONT-side of the multiport extender device 1 as compared to an otherwise required legacy OLT receiver. On the feeder section, only PTP-grade optical components are necessary.

Although the present invention has been described by referring to GPON, this is only an example application and the inventive concept may be applied to other optical networks, too.

## Claims

1. Multiport passive optical network, PON, extender (1) comprising:
an optical input/output port for connection via an optical fiber (4) to the feeder side of the PON;
a plurality of optical input/output ports for connection via respective optical fibers (5) to the distribution side of the PON; and
an electrical distribution network (6) for connecting the feeder-sided input/output port to the plurality of distribution-sided input/output ports in the electrical domain.

2. Multiport PON extender (1) of claim 1 comprising optical transceivers (7) in the input/output ports and at least one electrical 2R repeater (8) in the electrical distribution network (6).

3. Multiport PON extender (1) of claim 1 wherein only Layer-1 network functions are performed in the multiport extender (1).

4. Multiport PON extender (1) of claim 1 wherein incoming optical signals in downstream and upstream direction are forwarded transparently with regard to the PON multiple access control protocol to the respective opposite input/output port(s).

5. Passive optical network comprising at least one multiport extender (1) according to claim 1.

6. Passive optical network of claim 5 wherein a distribution-sided input/output port of a first multiport extender (1) is connected to the feeder-sided input/output port of a second multiport extender (1).

7. Method for extending a passive optical network, PON, comprising:
receiving an optical input signal from the feeder side of the PON;
converting the received optical input signal into an electrical input signal;
splitting the electrical input signal into identical electrical output signals;
providing the electrical output signals to electrical/optical converters and converting the respective electrical output signals to corresponding optical output signals; and
transmitting the optical output signals on respective optical ports to the distribution side of the PON,
wherein the optical output signals that are transmitted to the distribution side of the PON are identical.

8. Method of claim 7, comprising:
amplifying the converted electrical signal; and
regenerating pulse shapes of the electrical signal before splitting the signal.

9. Method for extending a passive optical network, PON, comprising:
receiving optical signals on optical ports from the distribution side of the PON;
converting the optical signals to electrical signals;
combining the electrical signals;
converting the combined electrical signal to an optical signal; and
transmitting the optical signal on the feeder side of the PON.

10. Method of claim 9, comprising:
amplifying the converted electrical signals up to a common signal level; and
regenerating pulse shapes of the electrical signal before adding the signal.

## Amended claims

### Amended claims in accordance with Rule 137(2) EPC.

**1.** Multiport passive optical network, PON, extender (1) comprising:
an optical input/output port for connection via an optical fiber (4) to the feeder side of the PON;
a plurality of optical input/output ports for connection via respective optical fibers (5) to the distribution side of the PON; and
an electrical distribution network (6) for connecting the feeder-sided input/output port to the plurality of distribution-sided input/output ports in the electrical domain
wherein
only Layer-1 network functions are performed in the multiport extender (1); and
incoming optical signals in downstream and upstream direction are forwarded transparently with regard to the PON multiple access control protocol to the respective opposite input/output port(s).

**2.** Multiport PON extender (1) of claim 1 comprising optical transceivers (7) in the input/output ports and at least one electrical 2R repeater (8) in the electrical distribution network (6).

**3.** Passive optical network comprising at least one multiport extender (1) according to claim 1.

**4.** Passive optical network of claim 3 wherein a distribution-sided input/output port of a first multiport extender (1) is connected to the feeder-sided input/output port of a second multiport extender (1).

**5.** Method for extending a passive optical network, PON, comprising:
receiving an optical input signal from the feeder side of the PON;
converting the received optical input signal into an electrical input signal;
splitting the electrical input signal into identical electrical output signals;
providing the electrical output signals to electrical/optical converters and converting the respective electrical output signals to corresponding optical output signals; and
transmitting the optical output signals on respective optical ports to the distribution side of the PON,
wherein
the optical output signals that are transmitted to the distribution side of the PON are identical;
the received optical input signal is forwarded transparently with regard to the PON multiple access control protocol to the respective optical output ports; and
only Layer-1 network functions are performed.

**6.** Method of claim 5, comprising:
amplifying the converted electrical signal; and
regenerating pulse shapes of the electrical signal before splitting the signal.

**7.** Method for extending a passive optical network, PON, comprising:
receiving optical signals on optical ports from the distribution side of the PON;
converting the optical signals to electrical signals;
combining the electrical signals;
converting the combined electrical signal to an optical signal; and
transmitting the optical signal on the feeder side of the PON
wherein
the received optical signals are forwarded transparently with regard to the PON multiple access control protocol to the feeder side of the PON; and
only Layer-1 network functions are performed.

**8.** Method of claim 7, comprising:
amplifying the converted electrical signals up to a common signal level; and
regenerating pulse shapes of the electrical signal before adding the signal.
